# EUROPEAN PATENT SPECIFICATION

(11) **EP 3 299 151 B1**
(45) Date of publication and mention of the grant of the patent: **26.02.2020**
(21) Application number: 16901165.7
(22) Date of filing: 11.10.2016
(51) Int. Cl.: B29C 64/118, B29C 64/209, B33Y 30/00, B29C 64/336, B29C 48/285, B29C 48/30, B29C 48/80, B29C 64/295, B29C 48/345

(54) **THREE-DIMENSIONAL PRINTER HEAD FOR DISCHARGING MULTIPLE MOLDING MELT SOLUTIONS AND THREE-DIMENSIONAL PRINTER COMPRISING SAME**
KOPF FÜR EINEN DREIDIMENSIONALEN DRUCKER ZUR AUSGABE MEHRERER FORMSCHMELZLÖSUNGEN UND DREIDIMENSIONALER DRUCKER DAMIT
TÊTE D'IMPRIMANTE TRIDIMENSIONNELLE POUR DISTRIBUER DE MULTIPLES SOLUTIONS DE MOULAGE À L'ÉTAT FONDU ET IMPRIMANTE TRIDIMENSIONNELLE LA COMPRENANT

(30) Priority: 12.05.2016 KR 20160058334
(43) Date of publication of application: 28.03.2018
(73) Proprietor: Kookmin University Industry Academy Cooperation Foundation, Seoul 02707 (KR)
(72) Inventor: JANG, Jung Sik, Paju-si Gyeonggi-do 10874 (KR)
(74) Representative: Zardi, Marco
(86) International application number: PCT/KR2016/011334
(87) International publication number: WO 2017/195947

(56) References cited:
- WO-A1-2015/059603
- CN-U- 204 160 774
- KR-A- 20030 089 074
- KR-A- 20150 114 861
- KR-A- 20150 126 120
- KR-A- 20150 135 567
- KR-A- 20150 135 567
- KR-A- 20160 030 616
- KR-A- 20160 035 451
- KR-A- 20160 035 451
- KR-B1- 101 582 609

## Description

### [Technical Field]

The present invention relates to a 3D printer head for ejecting a multi-molding melt and a 3D printer including the same. More particularly, it relates to a 3D printer head and a 3D printer including the same capable of printing various types of 3D molding objects by melting and ejecting molding filaments and molding pellets together in a stacked type 3D printing method.

### [Background Art]

A product molding method of a 3D printer largely includes a stacking method in which a target object is formed by stacking layers in a 2D planar form and melting and bonding the stacked layers while stacking the layers in a 3D manner, and a cutting method in which a shape is formed by cutting a material block like as carving.

The stacking method is a method of forming a 3D shape by stacking powder (powder of gypsum or nylon) or a plastic liquid or plastic yarn in layers (layers) thinner than papers and has advantages of obtaining a precise shape as the layers are thinner and simultaneously performing coloring.

The cutting method is a method of forming a 3D shape by cutting a big chunk like as carving and has an advantage that a finished product is more precise than the stacking method, it is difficult to make a concave shape like a cup, and coloring is separately required.

As a kind of stacked method, there is a filament melt stacked molding method of molding an object in three dimension by supplying wires or filaments made of thermoplastics by a supply reel and a conveyor roll and melting and ejecting the supplied filaments in a heater nozzle mounted on a 3D conveyor mechanism.

In the case of the filament melt stacked molding method, generally, one molding material is ejected and stacked to form a 3D molding object, and when the molding material is formed in multiple according to the characteristics of the molded 3D molding object, various types of 3D molding objects can be formed.

Examples of 3D printers and printer heads according to the prior art are known from KR 20150135567 A and CN 204160774 U.

### [Disclosure]

### [Technical Problem]

According to the present invention there are provide a 3D printer head as claimed in claim 1 and a 3D printer as claimed in claim 9.

According to an aspect, disclosed is a 3D printer head of ejecting a multi-molding melt by receiving a molding filament and molding pellets, the 3D printer head including: a filament supply unit supplying the molding filament; a pellet supply unit supplying the molding pellets; a nozzle pipe in which a penetration portion is provided therein in a longitudinal direction, the molding pellets are supplied from the pellet supply unit, and the molding pellets move; a rotary screw which is disposed in the penetration portion of the nozzle pipe, advances the molding pellets to one end of the nozzle pipe 32 by rotation, and has a filament supply path through which the molding filament is supplied, which is formed therein in a longitudinal direction; a heating portion which melts the molding pellets and the molding filament by heating the nozzle pipe to form the multi-molding melt; and a nozzle tip which is connected to one end of the nozzle pipe and ejects the molding melt.

The pellet supply unit may include a hopper portion which communicates with the nozzle pipe and supplies the molding pellets to the nozzle pipe and a mixing screw which is provided in the hopper portion and mixes the molding pellets according to the rotation.

The rotary screw may include a linear rod body formed through the filament supply path in the longitudinal direction and a spiral formed on the outer periphery of the linear rod body in the longitudinal direction. In this case, a section enlarging portion of which the cross section is enlarge toward one end of the rod body may be formed at one end of the rod body and a height of the spiral formed at the section enlarging portion may be decreased toward one end of the rod body.

A nozzle hole through which the molding melt may be ejected is provided in the nozzle tip, and the nozzle holes may include a first nozzle hole rough which the molding filament melt is ejected; and a second nozzle hole which is formed along the outer periphery of the first nozzle hole and through which the molding pellet melt is ejected.

A plurality of nozzle tips may be provided and each of the plurality of nozzle tips is interchangeably coupled to one end of the nozzle pipe, and in each of the plurality of nozzle tips, nozzle holes having different ejection patterns may be formed.

The heating portion includes a plurality of heating units disposed to be spaced apart from each other in a longitudinal direction of the nozzle pipe.

The plurality of heating units may be spaced apart from each other at one end of the nozzle pipe adjacent to the nozzle tip.

A temperature sensor measuring the temperature of the molding melt may be provided in each of the plurality of heating units.

The 3D printer head further includes a head weight measuring unit measuring the weigh of the 3D printer head.

The rigidity after curing the molding filament melt may be greater than the rigidity after curing the molding pellet melt.

The nozzle pipe may be made of a metallic material having high thermal conductivity.

According to another aspect, disclosed is a 3D printer ejecting a multi-molding melt including: a printer body in which an internal space is partitioned; a stage dispose in the internal space of the printer body; the 3D printer head which is disposed in the internal space of the printer body to eject a molding melt on the stage; and a conveying mechanism connected with the 3D printer head to set a position of the 3D printer head.

The 3D printer head ejecting the multi-molding melt may further include a plurality of pellet storage portions storing a plurality of different molding pellets and supplying the plurality of molding pellets to the pellet supply portion; and a pellet measuring unit connected to each of the plurality of pellet storage portions to measure the molding pellets supplied from the each pellet storage portion to the pellet supply portion.

The 3D printer head may further include a crushing unit which finely crushes 3D waste to regenerate molding pellets and supplies the regenerated molding pellets to the plurality of pellet storage units.

### [Advantageous Effects]

According to the exemplary embodiment of the present invention, it is possible to print various types of 3D molding objects by ejecting molding filaments and molding pellets together in a stacked type 3D printing method.

### [Description of Drawings]

FIG. 1 is a diagram schematically illustrating a 3D printer head for ejecting a multi-molding melt according to an exemplary embodiment of the present invention.
FIG. 2 is a diagram schematically illustrating a nozzle tip of the 3D printer head for ejecting the multi-molding melt according to the exemplary embodiment of the present invention.
FIG. 3 is a diagram illustrating a cross section of a molding melt ejected from the 3D printer head for ejecting the multi-molding melt according to the exemplary embodiment of the present invention.
FIG. 4 is a diagram schematically illustrating a modified example of the nozzle tip of the 3D printer head for ejecting the multi-molding melt according to the exemplary embodiment of the present invention.
FIG. 5 is a diagram schematically illustrating a 3D printer including a 3D printer head for ejecting a multi-molding melt according to another exemplary embodiment of the present invention.
FIG. 6 is a diagram for describing supplying a molding pellet of the 3D printer including the 3D printer head for ejecting the multi-molding melt according to another exemplary embodiment of the present invention.

### [Modes of the Invention]

The present invention may have various modifications and various exemplary embodiments and specific exemplary embodiments will be described in detail in the detailed description.

Hereinafter, exemplary embodiments of a 3D printer head for ejecting a multi-molding melt and a 3D printer including the same according to the present invention will be described in detail with reference to the accompanying drawings. In the following description with reference to the accompanying drawings, the same or corresponding components designate the same reference numerals, and the duplicated description thereof will be omitted.

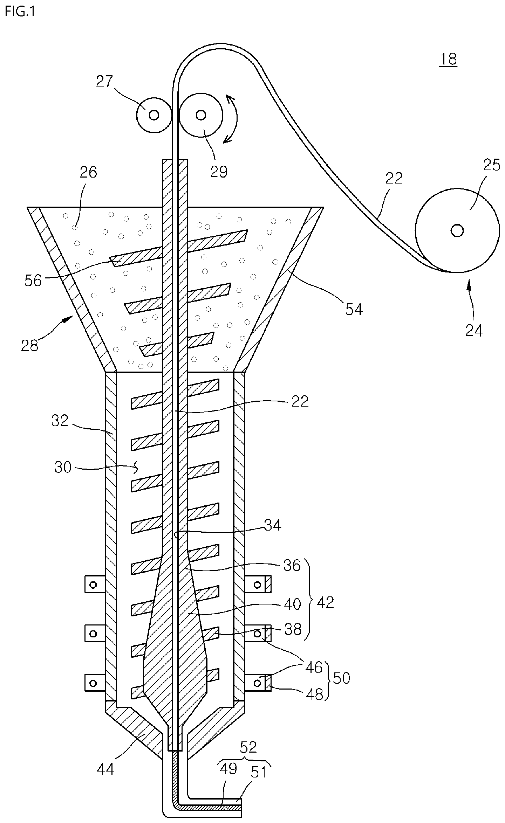

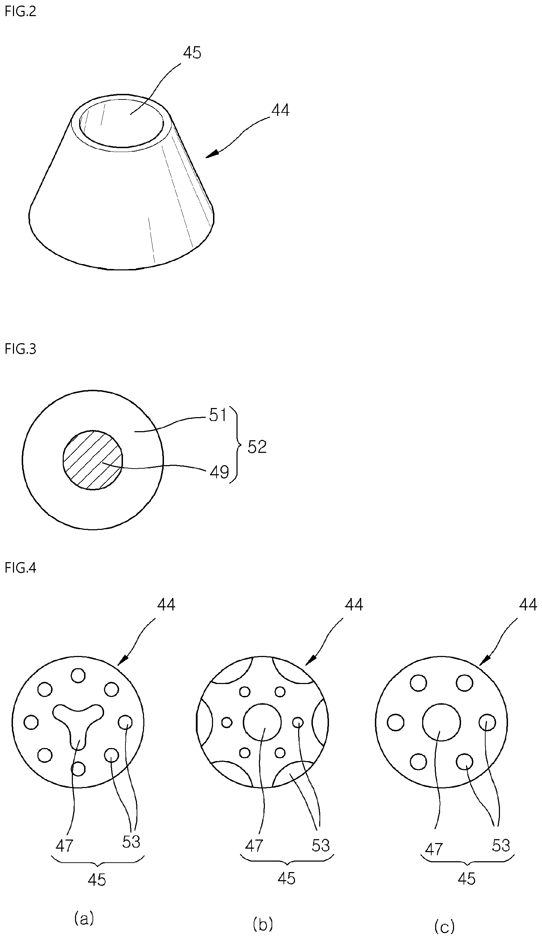

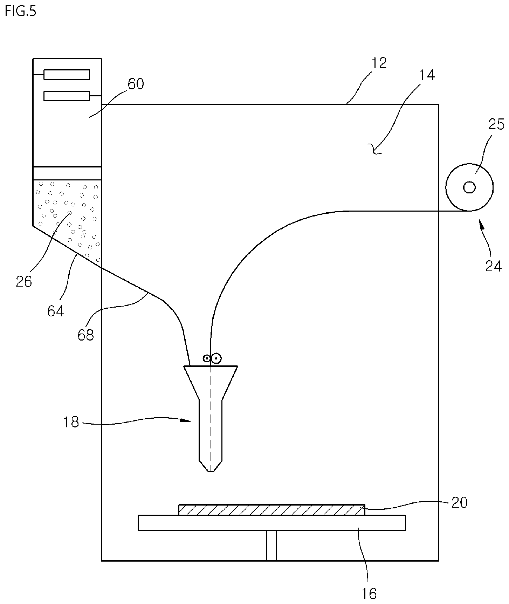

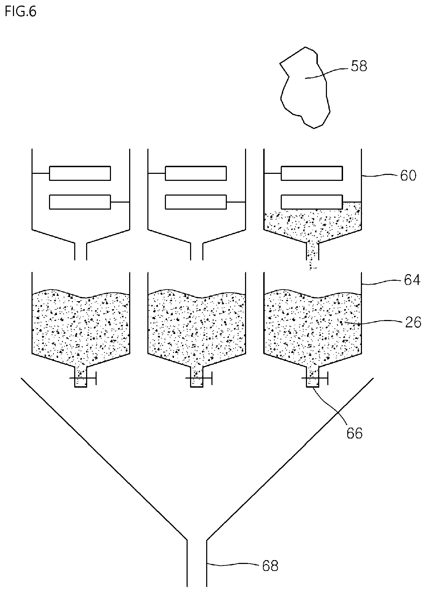

FIG. 1 is a diagram schematically illustrating a 3D printer head for ejecting a multi-molding melt according to an exemplary embodiment of the present invention, FIG. 2 is a diagram schematically illustrating a nozzle tip of the 3D printer head for ejecting the multi-molding melt according to the exemplary embodiment of the present invention, and FIG. 3 is a diagram illustrating a cross section of a molding melt ejected from the 3D printer head for ejecting the multi-molding melt according to the exemplary embodiment of the present invention. In addition, FIG. 4 is a diagram schematically illustrating a modified example of the nozzle tip of the 3D printer head for ejecting the multi-molding melt according to the exemplary embodiment of the present invention. In addition, FIG. 5 is a diagram schematically illustrating a 3D printer including a 3D printer head for ejecting a multi-molding melt according to another exemplary embodiment of the present invention and FIG. 6 is a diagram for describing supplying a molding pellet of the 3D printer including the 3D printer head for ejecting the multi-molding melt according to another exemplary embodiment of the present invention.

FIGS. 1 to 6 illustrate a printer body 12, an internal space 14, a stage 16, a 3D printer head 18, a 3D object 20, a molding filament 22, a filament supply unit 24, a filament supply reel 25, a molding pellet 26, an idler 27, a pellet supply unit 28, a conveying roll 29, a penetration portion 30, a nozzle pipe 32, a filament supply path 34, a rod body 34, a section enlarging portion 40, a spiral 38, a rotary screw 42, a nozzle tip 44, a nozzle hole 45, a heating unit 46, a first nozzle hole 47, a temperature sensor 48, a molding filament melt 49, a heating portion 50, a molding pellet melt 51, a molding melt 52, a second nozzle hole 53, a hopper portion 54, a mixing screw 56, a 3D waste 58, a crushing unit 60, a pellet storage portion 64, a pellet measuring unit 66, and a supply pipe 68.

Since the 3D printer head 18 ejecting the multi-molding melt according to the exemplary embodiment is attached to a conveying mechanism (not illustrated) of the 3D printer to form a 3D object on a stage 16, the 3D printer will be first described with reference to FIGS. 5 and 6, before the 3D printer head 18 according to the exemplary embodiment is described.

The 3D printer head 18 ejecting the multi-molding melt includes a printer body 12 in which the internal space 14 is partitioned; a stage 16 dispose in the internal space 14 of the printer body 12; the 3D printer head 18 according to the exemplary embodiment disposed in the internal space 14 of the printer body 12 to eject a molding melt 52 on the stage; and a conveying mechanism (not illustrated) connected with the 3D printer head 18 to set a position of the 3D printer head.

The printer body 12 forms a body of the 3D printer and may include a plurality of frames installed so as to partition the internal space 14, a transparent panel covering the frames, and the like.

In the internal space 14 of the printer body 12, a conveying mechanism (not illustrated) moving 3-dimensionally the 3D printer head 18 to be described below may be provided, and the 3D printer head 18 is connected to the conveying mechanism.

The stage 16 is disposed in the internal space 14 of the printer body 12. The stage 16 is a place where the molding melt 52 ejected from the 3D printer head 18 is stacked to form the 3D object 20, and may move 2-dimensionallyseparately from the conveying mechanism for moving the 3D printer head 18.

The 3D printer head 18 is disposed in the internal space 14 of the printer body 12 and ejects the molding melt 52 on the stage 16 to form the 3D object 20. The 3D printer head 18 is disposed to face the stage 16 and forms the 3D object 20 while the molding melt 52 ejected from the 3D printer head 18 is stacked on the stage 16.

The 3D printer head 18 according to the exemplary embodiment ejects the multi- molding melt 52 by simultaneously supplying and melting the molding filament 22 and the molding pellets 26. This will be described below in detail.

Meanwhile, when a printing error occurs in the 3D printing process, the pre-molded 3D object may be discarded to cause waste of an expensive molding source. The 3D printer head 18 according to the exemplary embodiment may be configured to recycle the 3D waste 58 generated in the molding process. That is, as illustrated in FIG. 6, the 3D waste 58 is finely crushed in the form of the molding pellets 26 to be used as a molding source, thereby reducing the waste of the material.

Hereinafter, the 3D printer head 18 ejecting the multi-molding melt according to the exemplary embodiment will be described in detail.

The 3D printer head 18 ejecting the multi-molding melt according to the exemplary embodiment which ejects the multi-molding melt 52 by receiving the molding filament 22 and the molding pellets 26, includes a filament supply unit 24 supplying the molding filament 22; a pellet supply unit 28 supplying the molding pellets 26; a nozzle pipe 32 in which a penetration portion 30 is provided therein in a longitudinal direction, the molding pellets 26 are supplied from the pellet supply unit 28, and the molding pellets 26 move; a rotary screw 42 which is disposed in the penetration portion 30 of the nozzle pipe 32, advances the molding pellets 26 to one end of the nozzle pipe 32 by rotation; a heating portion 50 which melts the molding pellets 26 and the molding filament 22 by heating the nozzle pipe 32 to form the multi-molding melt 52; and a nozzle tip 44 which is connected to one end of the nozzle pipe 32 and ejects the molding melt 52.

The molding filament 22 is a thin linear material made of thermoplastic, acrylonitrile butadiene styrene (ABS), polyacetic acid (PLA), etc., and a 3D printer material ejected while melted by heating after supplied to the 3D printer head 18 in the filament form. The molding filament 22 is wound on the filament supply reel 26 and then supplied to the 3D printer head 18 in the linear form according to the rotation of the conveying roll 29.

The molding pellet 26 is a material melted by heat, such as thermoplastic, ABS, PLA, glass, and the like and provided in a granular form. In the exemplary embodiment, the shape of the molding pellet 26 is shown in the granular form, but it is not limited thereto and includes powder-shaped molding pellets 26. Even in the molding filament 22, the molding pellets 26 in the raw material form are extruded and molded to form a wire-shaped molding filament 22.

In the exemplary embodiment, the multi-molding melt 52 mixed with different materials may be ejected by varying the material of the molding filament 22 and the material of the molding pellets 26. Accordingly, the multi-molding melt 52 is ejected to mold the 3D object 20. The multi-molding melt is formed of different molding materials to fabricate various types of 3D objects 20.

The filament supply unit 24 may include the filament supply reel 25 wound with the molding filament 22 and the conveying roll 29 supplying the molding filament 22 wound on the filament supply reel 25 to the 3D printer head 18. When the conveying roll 29 is rotated while the idler 27 is disposed on one outer periphery of the molding filament 22 and the conveying roll 29 is disposed on the other side, the molding filament 22 may be advanced or retreated by the frictional force between the conveying roll 29 and the molding filament 22.

The pellet supply unit 28 stores the molding pellets 26 in a solid state and then supplies the molding pellets 26 to the nozzle pipe 32. When the 3D object 20 is formed by melting only the molding filament 22 like the related art, a high-precise molding object may be fabricated by thinning the stacked layer. However, in the case of forming a large 3D object 20 such as an automobile or a building, the molding efficiency may be deteriorated, and even in the large 3D object 20, the molding pellets 26 in the raw material form is used as a molding source together with the molding filament 22 to shorten the molding time.

The pellet supply unit 29 according to the exemplary embodiment includes a hopper portion 54 which communicates with the nozzle pipe 32 and supplies the molding pellets 26 to the nozzle pipe 32 and a mixing screw 56 which is provided in the hopper portion 54 and mixes the molding pellets 26 according to the rotation. In the exemplary embodiment, a separate mixing screw spiral is attached to the rod body 34 of the rotary screw 42 so that the mixing screw 56 and the rotary screw 42 are simultaneously rotated. Of course, the mixing screw 56 and the rotary screw 42 may be separately rotated.

In the 3D printer, as illustrated in FIG. 6, the different molding pellets 26, which are measured by a pellet measuring unit 66 of each pellet storage portion 64 and introduced into the pellet supply unit 28, may be mixed with each other according to the rotation of the mixing screw 56 of the hopper portion 54 and then introduced into the nozzle pipe 32.

The nozzle pipe 3 has a penetration portion 30 therein in a longitudinal direction and provides a path through which the molding pellets 26 are supplied from the pellet supply unit 28 and then move. The penetration portion 30 is formed by penetrating in the longitudinal direction of the nozzle pipe 32 and the solid-stated molding pellets 26 introduced from the pellet supply unit 28 move along the penetration portion 30. The rotary screw 42 is provided in the penetration portion 30 of the nozzle pipe 32 for movement of the molding pellets 26 and the molding pellets 26 of the penetration portion 30 are advance to one end or retreated to the other end according to the rotation of the rotary screw 42.

The rotary screw 42 is disposed in the penetration portion 30 of the nozzle pipe 32 and the molding pellets 26 are advanced or retreated to the end of the nozzle pipe 32 according to the rotation. A filament supply path 34 through which the molding filament 22 is supplied is formed in the rotary screw 42 in the longitudinal direction.

A driving unit such as a motor (not illustrated) is connected to the rotary screw 42 to advance or retreat the molding pellets 26 in the penetration portion 30 of the nozzle pipe 32 according to rotation and reverse rotation. Gaps of the threads of the rotary screw 42 may be determined by considering the size of the molding pellets 26, an ejecting speed of the molding melt 52, and the like.

A filament supply path 34 through which the molding filament 22 to be described above is supplied is formed in the rotary screw 42. The molding filament 22 inserted at the other end of the rotary screw 42 moves to the one end of the rotary screw 42 through the filament supply path 34 and the molding filament 22 moving to one end is melted to be ejected to the nozzle tip 44.

In the exemplary embodiment, although one filament supply path 34 is formed in the rod by 34 of the rotary screw 42 to supply one molding filament 22, a plurality of different molding filaments 22 may be supplied by forming a plurality of filament supply paths 34 in the rod body 34.

The molding pellets 26 move toward the one end of the rotary screw 42 by the rotation of the rotary screw 42, and simultaneously, the molding filament 22 is melted together by the heating portion 50 while moving toward one end of the rotary screw 42 through the filament supply path 34 of the rotary screw 42 to be ejected from the nozzle tip 44.

Meanwhile, the rotary screw 42 according to the exemplary embodiment includes a linear rod body 34 formed through the filament supply path 34 in the longitudinal direction and a spiral 38 formed on the outer periphery of the linear rod body 34 in the longitudinal direction. The section enlarging portion 40 of which the cross section is enlarge toward one end of the rod body 34 is formed at one end of the rod body 34 and a height of the spiral 38 formed at the section enlarging portion 40 may be decreased toward one end of the rod body 34. Since the section enlarging portion 40 of the rod body 34 is present inside the nozzle pipe 32, the cross section of the molding pellet melt 51 which is ejected while the concrete mixture moves from one end to the other end of the nozzle pipe 32 is reduced to generate an ejection pressure, thereby ejecting a predetermined amount of molding pellet melt 51 ejected from the 3D printer head 18.

The heating portion 50 melts the molding pellets 26 and the molding filament 22 by heating the nozzle pipe 32 to form the multi-molding melt 52. As described above, the molding pellets 26 and the molding filament 22 move toward one end of the nozzle pipe 32 through the rotary screw 42 and the heating portion 50 heats and melts the molding pellets 26 and the molding filament 22 in the moving process to form the multi-molding melt 52.

In the exemplary embodiment, the heating portion 50 includes a plurality of heating units 46 disposed to be spaced apart from each other in a longitudinal direction of the nozzle pipe 32. The heating unit 46 heats and melts the molding pellets 26 and the molding filament 22 in the solid state which move along the inside of the nozzle pipe 32. The heating units 46 may be spaced apart from each other in the longitudinal direction of the nozzle pipe 32, and in the exemplary embodiment, as illustrated in FIG. 1, the heating units 46 are spaced apart from each other at one end of the nozzle pipe 32 adjacent to the nozzle tip 44. The molding pellets 26 and the molding filament 22 introduced through the other end of the nozzle pipe 32 are melted before being ejected from the nozzle tip 44 while moving to one end of the nozzle pipe 32 through the rotary screw 42.

In the exemplary embodiment, the molding pellets 26 may be uniformly melted while sequentially applying the heat by the plurality of heating units 46 spaced apart from each other. A temperature sensor 48 capable of measuring the temperature of the molding melt 52 at the position of each heating unit 46 is attached to each of the plurality of heating units 46 and a controller (not illustrated) measures the temperature of the molding melt 52 in each heating unit 46 to determine an optimum melting temperature.

Meanwhile, the 3D printer head 18 according to the exemplary embodiment may include a head weight measuring unit (not illustrated) measuring the weight of the 3D printer head 18 described above. When the molding pellets 26 in the solid state is phase-changed into the molding melt 52 in the liquid state by heating of the heating unit 46, the weight is physically changed, and a temperature of the molding melt 52 when a change in weight of the 3D printer head 18 occurs by measuring the weight of the 3D printer head 18 in addition to the temperature of the molding melt 52 in the heating unit 46 may be selected as the optimal melting temperature of the corresponding molding pellets 26.

When the types and characteristics of the molding pellets 26 and the molding filament 22 are known, the optimum melting temperature of the corresponding molding pellets 26 may be known in advance by means of an experimental reports or the like, but in the case of recycling the 3D waste 58, the accurate melting temperature of the corresponding 3D waste 58 is often unknown. Accordingly, the accurate melting temperature of the corresponding 3D waste 58 may be determined by the plurality of heating units 46, the temperature sensor 48, and the head weight measuring unit (not illustrated) described above.

The nozzle tip 44 is coupled to one end of the nozzle pipe 32 and ejects the molding filament melt 49 and the molding pellet melt 51 during the movement of the nozzle pipe 32. FIG. 2 illustrates the nozzle tip 44 according to the exemplary embodiment and a nozzle hole 45 through which the molding melt 52 is ejected is provided in the nozzle tip 44. The molding filament melt 49 ejected through the filament supply path 34 of the rotary screw 42 is ejected from the center of the nozzle hole 45 and the molding pellet melt 51 is ejected through the nozzle hole 45 while covering the molding filament melt 49 at the core. That is, referring to FIGS. 1 and 3, the molding filament melt 49 is ejected through the center of the rotary screw 42 and the molding pellet melt 51 is ejected while covering the molding filament melt 49 by moving along the outer periphery of the rotary screw 42. Accordingly, as illustrated in FIG. 3, the molding filament melt 49 is positioned at the core of the molding pellet melt 51 and has the same cross section even after curing.

When the molding filament 22 and the molding pellets 26 are selected so that the rigidity after curing the molding filament melt 49 is greater than the rigidity after curing the molding pellet melt 51. In addition, when the 3D object 20 is made of a material having large rigidity, the cost may increase due to the characteristic of the material, and as a result, the material of the core forming a skeleton is selected as a material having large rigidity and an outer periphery material covering the core is selected as a material having slightly weak rigidity to form the 3D object 20, thereby obtaining a cost reduction effect.

Meanwhile, a plurality of nozzle tips 44 may be provided and each of the plurality of nozzle tips 44 may be interchangeably coupled to one end of the nozzle pipe 32, and in each of the plurality of nozzle tips 44, nozzle holes 45 having different ejection patterns may be formed. Various types of nozzle tips 44 having nozzle holes 45 having different ejection patterns are prepared and the nozzle tip 44 may be replaced according to the shape and characteristics of the 3D object 20.

In FIG. 4, the nozzle tips 44 having various types of nozzle holes 45 are illustrated, and in order to vary the ejection patterns of the molding filament melt 49 and the molding pellet melt 51, FIG. 4 illustrates various types of nozzle holes 45 including a first nozzle hole 47 through which the molding filament melt 49 is ejected and a second nozzle hole 53 which is formed along the outer periphery of the first nozzle hole 47 and through which the molding pellet melt 51 is ejected. That is, when the nozzle tip 44 is coupled to the nozzle pipe 32, the first nozzle hole 47 is formed at a position corresponding to the filament supply path 34 of the rotary screw 42 to eject the molding filament melt 49 and the second nozzle hole 49 is formed at a position corresponding to the outer periphery of the rotary screw 42 to eject the molding pellet melt 51 while covering the molding filament melt 49.

The nozzle pipe 32 may be made of a metallic material having high thermal conductivity, for example, a material including brass, aluminum, and the like. A heating portion 50 for melting the molding filament 22 and the molding pellets 26 in the nozzle pipe 32 is provided outside the nozzle pipe 32, and the heat of the heating portion 50 is made of a material having high thermal conductivity so that the heat of the heating portion 50 is easily transmitted to the molding pellets 26 and the molding filament 22.

FIG. 6 is a diagram for describing a process of supplying the molding pellets of the 3D printer according to the exemplary embodiment. The 3D printer according to the exemplary embodiment includes a plurality of pellet storage portions 64 storing a plurality of different molding pellets 26 and supplying the plurality of molding pellets 26 to the pellet supply portion 28; and a pellet measuring unit 66 connected to each of the plurality of pellet storage portions 64 to measure the molding pellets 26 supplied from the each pellet storage portion 64 to the pellet supply portion 28.

A molding melt 52 having a new characteristic may be fabricate by mixing a plurality of molding pellets 26 having different characteristics. For example, the molding melt 52 having a desired color is formed by mixing the molding pellets 26 having different colors at an appropriate mixing ratio to form a 3D object 20 having various colors.

Referring to FIG. 6, the pellet measuring portion 66 capable of adjusting a mixing amount of the molding pellets 26 is provided with each pellet storage unit 64 to determine a mixing amount of the plurality of molding pellets 26 according to a desired characteristic of the user. Accordingly, the molding pellets 26 are measured in the pellet measuring portion 66 of each pellet storage portion 64 and mixed to be supplied to the pellet supply portion 28 through the supply pipe 68. The different molding pellets 26, which are measured by the pellet measuring portion 66 of each pellet storage portion 64 and introduced into the pellet supply unit 28, may be mixed with each other according to the rotation of the mixing screw 56 of the hopper portion 54 to be introduced into the nozzle pipe 32. The molding pellets 26 to be mixed with each other are melted by the plurality of heating units 46 of the nozzle pipe 32, resulting in a phase change to the molding pellet melt 51. In this case, since the melting temperatures of the molding pellets 26 having different characteristics may be different from each other, the optimum melting temperature is determined through the plurality of heating units 46 and heated to the optimal melting temperature to form a homogeneous molding pellet melt 51.

Meanwhile, the 3D printer according to the exemplary embodiment may recycle the 3D waste 58. When a printing error occurs in the 3D printing process, the pre-molded 3D object 20 may be discarded to cause waste of an expensive molding source. In the exemplary embodiment, the 3D waste 58 is finely crushed and supplied to the 3D printer head 18 to be recycled.

When the 3D waste 58 cut in the bulk form is introduced, the crushing unit 60 finely crushes the introduced 3D waste 58 and the crushed 3D waste is regenerated in the form of molding pellets 26 and supplied to the pellet storage portion 64. The regenerated molding pellets 26 supplied to the pellet storage portion 64 are again supplied to the 3D printer head 18 and used as a molding source.

The crushing unit 60 sequentially crushes the large bulk by configuring the crushing process into a plurality of stages and crushes the molding source into the usable pellet forms to supply the pellet in the pellet storage portion 64.

While this invention has been described in connection with practical exemplary embodiments, it is to be understood that the scope of the present invention is defined by appended claims.

## Claims

1. A 3D printer head (18) for ejecting a multi-molding melt (52), said printer head (18) being adapted to receive a molding filament (22) and molding pellets (26), the 3D printer head (18) comprising:
a filament supply unit (24) supplying the molding filament (22);
a pellet supply unit (28) supplying the molding pellets (26);
a nozzle pipe (32) in which a penetration portion (30) is provided therein in a longitudinal direction, wherein the molding pellets (26) are supplied from the pellet supply unit (28), and the molding pellets move;
a rotary screw (42) which is disposed in the penetration portion (30) of the nozzle pipe (32), wherein said rotary screw (42) is adapted to advance the molding pellets (26) to one end of the nozzle pipe (32) by rotation, and has a filament supply path (34) through which the molding filament (22) is supplied, said filament supply path being formed in said rotary screw (42) in a longitudinal direction;
a heating portion (50) adapted to melt the molding pellets (26) and the molding filament (22) by heating the nozzle pipe (32), thus forming the multi-molding melt (52); and
a nozzle tip (44) which is connected to one end of the nozzle pipe ((32) and is adapted to eject the molding melt (52),
wherein the heating portion (50) includes a plurality of heating units (46) disposed to be spaced apart from each other in a longitudinal direction of the nozzle pipe (32), and in that
the 3D printer head (18) further comprises
a head weight measuring unit adapted to measure the weight of the 3D printer head (18).

2. The 3D printer head (18) of claim 1, wherein the pellet supply unit (28) includes
a hopper portion (54) which communicates with the nozzle pipe (32) and is adapted to supply the molding pellets (26) to the nozzle pipe (32); and
a mixing screw (56) which is provided in the hopper portion (54) and is adapted to mix the molding pellets (26) according to the rotation.

3. The 3D printer head (18) of claim 1, wherein the rotary screw (42) includes
a linear rod body (34) formed through the filament supply path (34) in the longitudinal direction; and
a spiral (38) formed on the outer periphery of the linear rod body (34) in the longitudinal direction,
wherein a section enlarging portion (40) of which the cross section is enlarged toward one end of the rod body (34) is formed at one end of the rod body (34) and a height of the spiral (38) formed at the section enlarging portion (40) is decreased toward one end of the rod body (34).

4. The 3D printer head (18) of claim 1, wherein nozzle holes (45) through which the molding melt (52) is ejected are provided in the nozzle tip (44), and wherein the nozzle holes (45) include
a first nozzle hole (47) through which the molding filament melt (49) is ejected; and
a second nozzle hole (53) which is formed along the outer periphery of the first nozzle hole (47) and through which the molding pellet melt (51) is ejected.

5. The 3D printer head (18) of claim 1, wherein a plurality of nozzle tips (44) is provided and each of the plurality of nozzle tips (44) is interchangeably coupled to one end of the nozzle pipe (32), and in each of the plurality of nozzle tips (44), nozzle holes having different ejection patterns are formed.

6. The 3D printer head (18) of claim 1, wherein the plurality of heating units (46) are spaced apart from each other at one end of the nozzle pipe (32) adjacent to the nozzle tip (44).

7. The 3D printer head (18) of claim 1, wherein a temperature sensor (48) adapted to measure the temperature of the molding melt (52) is provided in each of the plurality of heating units (46).

8. The 3D printer head (18) of claim 1, wherein the nozzle pipe (32) is made of a metallic material having high thermal conductivity.

9. A 3D printer for ejecting a multi-molding melt (52), comprising:
a printer body (12) in which an internal space (14) is partitioned;
a stage (16) disposed in the internal space (14) of the printer body (12);
the 3D printer head (18) according to any one of claims 1 to 8, which is disposed in the internal space (14) of the printer body (12) to eject a molding melt (52) on the stage (16); and
a conveying mechanism connected with the 3D printer head (18) to set a position of the 3D printer head (18).

10. The 3D printer of claim 9, further comprising:
a plurality of pellet storage portions (64) adapted to store a plurality of different molding pellets (26) and to supply the plurality of molding pellets (26) to the pellet supply portion (28); and
a pellet measuring unit (66) connected to each of the plurality of pellet storage portions (64) and adapted to measure the molding pellets (26) supplied from each of the pellet storage portions (64) to the pellet supply portion (28).

11. The 3D printer of claim 10, further comprising:
a crushing unit (60) which is adapted to finely crush 3D waste to regenerate molding pellets and to supply the regenerated molding pellets to the plurality of pellet storage units (64).

## Patentansprüche

1. 3D-Druckkopf (18) zum Ausstoßen einer Multiformschmelze (52), wobei der Druckkopf (18) daran angepasst ist, ein Formfilament (22) und Formpellets (26) aufzunehmen, wobei der 3D-Druckkopf (18) umfasst:
eine Filamentzuführeinheit (24), die das Formfilament (22) zuführt;
eine Pelletzuführeinheit (28), die die Formpellets (26) zuführt;
ein Düsenrohr (32), in dem ein Durchdringungsabschnitt (30) darin in einer Längsrichtung vorgesehen ist, wobei die Formpellets (26) von der Pelletzuführeinheit (28) zugeführt werden, und sich die Formpellets bewegen;
eine rotierende Schnecke (42), die in dem Durchdringungsabschnitt (30) des Düsenrohrs (32) angeordnet ist, wobei die rotierende Schnecke (42) daran angepasst ist, die Formpellets (26) durch Rotation zu einem Ende des Düsenrohrs (32) voranzubringen, und einen Filamentzuführpfad (34) aufweist, durch welchen das Formfilament (22) zugeführt wird, wobei der Filamentzuführpfad in der rotierenden Schnecke (42) in einer Längsrichtung gebildet ist;
einen Erwärmungsabschnitt (50), der daran angepasst ist, durch Erwärmen des Düsenrohrs (32) die Formpellets (26) und das Formfilament (22) zu schmelzen, wodurch die Multiformschmelze (52) gebildet wird; und
eine Düsenspitze (44), die mit einem Ende des Düsenrohrs (32) verbunden ist und daran angepasst ist, die Multiformschmelze (52) auszustoßen,
wobei der Erwärmungsabschnitt (50) eine Vielzahl von Erwärmungseinheiten (46) umfasst, die in einer Längsrichtung des Düsenrohrs (32) voneinander beabstandet angeordnet sind, und
wobei der 3D-Druckkopf (18) ferner eine Kopfgewichtsmesseinheit umfasst, die daran angepasst ist, das Gewicht des 3D-Druckkopfs (18) zu messen.

2. 3D-Druckkopf (18) nach Anspruch 1, wobei die Pelletzuführeinheit (28)
einen Trichterabschnitt (54), der mit dem Düsenrohr (32) in Verbindung steht und daran angepasst ist, dem Düsenrohr (32) die Formpellets (26) zuzuführen; und
eine Mischschnecke (56) umfasst, die in dem Trichterabschnitt (54) vorgesehen ist und daran angepasst ist, die Formpellets (26) gemäß der Rotation zu mischen.

3. 3D-Druckkopf (18) nach Anspruch 1, wobei die rotierende Schnecke (42)
einen linearen Stangenkörper (34), der durch den Filamentzuführpfad (34) in der Längsrichtung gebildet ist; und
eine Spirale (38) umfasst, die auf dem Außenumfang des linearen Stangenkörpers (34) in der Längsrichtung gebildet ist,
wobei ein Schnitterweiterungsabschnitt (40), dessen Querschnitt zu einem Ende des Stangenkörpers (34) hin erweitert ist, an einem Ende des Stangenkörpers (34) gebildet ist und eine Höhe der Spirale (38), die an dem Schnitterweiterungsabschnitt (40) gebildet ist, zu einem Ende des Stangenkörpers (34) hin verringert ist.

4. 3D-Druckkopf (18) nach Anspruch 1, wobei Düsenlöcher (45), durch welche die Multiformschmelze (52) ausgestoßen wird, in der Düsenspitze (44) vorgesehen sind, und
wobei die Düsenlöcher (45)
ein erstes Düsenloch (47), durch welches die Formfilamentschmelze (49) ausgestoßen wird; und
ein zweites Düsenloch (53) umfassen, welches entlang des Außenumfangs des ersten Düsenlochs (47) gebildet ist und durch welches die Formpelletschmelze (51) ausgestoßen wird.

5. 3D-Druckkopf (18) nach Anspruch 1, wobei eine Vielzahl von Düsenspitzen (44) vorgesehen ist und jede der Vielzahl von Düsenspitzen (44) austauschbar mit einem Ende des Düsenrohrs (32) gekoppelt ist, und in jedem der Vielzahl von Düsenspitzen (44) Düsenlöcher gebildet sind, die unterschiedliche Ausstoßmuster aufweisen.

6. 3D-Druckkopf (18) nach Anspruch 1, wobei an einem Ende des Düsenrohrs (32) angrenzend an die Düsenspitze (44) die Vielzahl von Erwärmungseinheiten (46) voneinander beabstandet sind.

7. 3D-Druckkopf (18) nach Anspruch 1, wobei ein Temperatursensor (48), der daran angepasst ist, die Temperatur der Formschmelze (52) zu messen, in jeder der Vielzahl von Erwärmungseinheiten (46) vorgesehen ist.

8. 3D-Druckkopf (18) nach Anspruch 1, wobei das Düsenrohr (32) aus einem metallischen Material besteht, das eine hohe thermische Leitfähigkeit aufweist.

9. 3D-Drucker zum Ausstoßen einer Multiformschmelze (52), umfassend:
einen Druckerkörper (12), in dem ein Innenraum (14) abgeteilt ist;
ein Gestell (16), das in dem Innenraum (14) des Druckerkörpers (12) angeordnet ist;
den 3D-Druckkopf (18) nach einem der Ansprüche 1 bis 8, der in dem Innenraum (14) des Druckerkörpers (12) angeordnet ist, um eine Formschmelze (52) auf dem Gestell (16) auszustoßen; und
einen Fördermechanismus, der mit dem 3D-Druckkopf (18) verbunden ist, um eine Position des 3D-Druckkopfs (18) einzustellen.

10. 3D-Drucker nach Anspruch 9, ferner umfassend:
eine Vielzahl von Pelletspeicherabschnitten (64), die daran angepasst sind, eine Vielzahl von unterschiedlichen Formpellets (26) zu speichern und dem Pelletzuführabschnitt (28) die Vielzahl von Formpellets (26) zuzuführen; und
eine Pelletmesseinheit (66), die mit jedem der Vielzahl von Pelletspeicherabschnitten (64) verbunden und daran angepasst ist, die von jedem der Pelletspeicherabschnitte (64) dem Pelletzuführabschnitt (28) zugeführten Formpellets (26) zu messen.

11. 3D-Drucker nach Anspruch 10, ferner umfassend:
eine Zerkleinerungseinheit (60), die daran angepasst ist, 3D-Abfall fein zu zerkleinern, um Formpellets zu regenerieren, und die regenerierten Formpellets der Vielzahl von Pelletspeicherabschnitten (64) zuzuführen.

## Revendications

1. Tête d'imprimante 3D (18) pour éjecter un fondu pour multi-moulage (52), la dite tête d'imprimante (18) étant adaptée à recevoir un filament de moulage (22) et des granulés de moulage (26), la tête d'imprimante 3D (18) comprenant :
une unité d'alimentation en filaments (24) fournissant le filament de moulage (22),
une unité d'alimentation en granulés (28) fournissant les granulés de moulage (26),
un tuyau de gicleur (32) dans lequel une partie de pénétration (30) est prévue à l'intérieur de ce dernier dans une direction longitudinale, où les granulés de moulage (26) sont fournis depuis l'unité d'alimentation en granulés (28) et ces granulés de moulage se déplacent,
une vis rotative (42) qui est placée dans la partie de pénétration (30) du tuyau du gicleur (32), où la dite vis rotative (42) est adaptée à faire avancer les granulés de moulage (26) jusqu'à une extrémité du tuyau du gicleur (32) par rotation et présente une voie d'alimentation en filament (34) à travers laquelle le filament de moulage (22) est fourni, la dite voie d'alimentation en filament étant formée dans la dite vis rotative (42) dans une direction longitudinale,
une unité de chauffage (50) adaptée pour faire fondre les granulés de moulage (26) et le filament de moulage (22) en chauffant le tuyau du gicleur (32), formant ainsi le fondu de multi-moulage (52) et
une extrémité du gicleur (44) qui est connectée à une extrémité du tuyau du gicleur (32) et est adaptée à éjecter le fondu de moulage (52),
**caractérisée en ce que**
l'unité de chauffage (50) inclut une pluralité d'unités de chauffage (46) placées de manière à être séparées les unes des autres dans une direction longitudinale du tuyau du gicleur (32) et **en ce que** la tête d'imprimante 3D (18) comprend en outre une unité de mesure du poids de la tête adaptée à mesurer le poids de la tête d'imprimante 3D (18).

2. Tête d'imprimante 3D (18) selon la revendication 1, **caractérisée en ce que** l'unité d'alimentation en granulés (28) inclut une partie en trémie (54) qui communique avec le tuyau du gicleur (32) et est adaptée à fournir les granulés de moulage (26) au tuyau du gicleur (32) et
une vis de mélange (56) qui est prévue dans la partie en trémie (54) et est adaptée à mélanger les granulés de moulage (26) en fonction de sa rotation.

3. Tête d'imprimante 3D (18) selon la revendication 1, **caractérisée en ce que** la vis rotative (42) inclut
un corps de tige linéaire (34) formé à travers la voie d'alimentation en filament (34) dans la direction longitudinale et
une spirale (38) formée sur la périphérie externe du corps de tige linéaire (34) dans la direction longitudinale,
où une partie d'élargissement (40) de la section dont la section transversale est agrandie en direction d'une extrémité du corps de tige (34) est formée au niveau d'une extrémité du corps de tige (34) et une hauteur de la spirale (38) formée au niveau de la partie d'élargissement (40) de la section est décroissante en direction d'une extrémité du corps de tige (34).

4. Tête d'imprimante 3D (18) selon la revendication 1, **caractérisée en ce que** les orifices du gicleur (45) à travers lesquels le fondu de moulage (52) est éjecté sont prévus dans l'extrémité du gicleur (44) et **en ce que** les orifices du gicleur (45) incluent
un premier orifice de gicleur (47) à travers lequel le fondu de filament de moulage (49) est éjecté, et
un deuxième orifice de gicleur (53) qui est formé le long de la périphérie externe du premier orifice du gicleur (47) et à travers lequel le fondu de granulés de moulage (51) est éjecté.

5. Tête d'imprimante 3D (18) selon la revendication 1, **caractérisée en ce qu'**une pluralité d'extrémités de gicleur (44) est prévue et chacune de la pluralité d'extrémités de gicleur (44) est couplée de manière interchangeable avec une extrémité du tuyau du gicleur (32) et dans chacune de la pluralité d'extrémités de gicleur (44), des orifices de gicleur présentent différents motifs d'éjection sont formés.

6. Tête d'imprimante 3D (18) selon la revendication 1, **caractérisée en ce que** la pluralité d'unités de chauffage (46) sont séparées les unes des autres au niveau d'une extrémité du tuyau de gicleur (32) adjacente à l'extrémité du gicleur (44).

7. Tête d'imprimante 3D (18) selon la revendication 1, **caractérisée en ce qu'**un détecteur de température (48) adapté à mesurer la température du fondu de moulage (52) est prévu dans chacune de la pluralité d'unités de chauffage (46).

8. Tête d'imprimante 3D (18) selon la revendication 1, **caractérisée en ce que** le tuyau du gicleur (32) est réalisé en une matière métallique présentant une conductivité thermique élevée.

9. Imprimante 3D pour éjecter un fondu pour multi-moulage (52), comprenant :
un corps d'imprimante (12) dans lequel un espace intérieur (14) est partitionné,
un étage (16) situé dans l'espace intérieur (14) du corps de l'imprimante (12),
la tête d'imprimante 3D (18) selon l'une quelconque des revendications 1 à 8, qui est placée dans l'espace intérieur (14) du corps de l'imprimante (12) pour éjecter un fondu de moulage (52) sur l'étage (16), et
un mécanisme de convoyage connecté à la tête d'imprimante 3D (18) pour régler une position de la tête de l'imprimante 3D (18).

10. Imprimante 3D selon la revendication 9, comprenant en outre :
une pluralité d'unités de stockage des granulés (64) adaptée à stocker une pluralité de différents granulés de moulage (26) et à fournir la pluralité de granulés de moulage (26) à la partie d'alimentation en granulés (28), et
une unité de mesure des granulés (66) connectée à chacune de la pluralité d'unités (64) de stockage des granulés et adaptée à mesurer les granulés de moulage (26) fournis par chacune des unités de stockage des granulés (64) à la partie d'alimentation en granulés (28).

11. Imprimante 3D selon la revendication 10, comprenant en outre :
une unité d'écrasement (60) qui est adaptée à écraser finement les déchets 3D pour régénérer des granulés de moulage et fournir les granulés de moulage régénérés à la pluralité d'unités de stockage des granulés (64).
